# EUROPÄISCHE PATENTSCHRIFT

(11) **EP 1 058 409 B1**
(45) Veröffentlichungstag und Bekanntmachung des Hinweises auf die Patenterteilung: **01.10.2008**
(21) Anmeldenummer: 00107837.7
(22) Anmeldetag: 12.04.2000
(51) Int. Cl.: H04B 7/185, H04B 10/10

(54) **Netz und Verfahren zur drahtlosen Datenkommunikation mittels Flugrelaissationen**
Network and method for wireless data communication network using flying relays
Réseau et méthode de communication de données sans fil au moyen de relais volants

(30) Priorität: 03.06.1999 CH 104199
(43) Veröffentlichungstag der Anmeldung: 06.12.2000
(73) Patentinhaber: Oerlikon Space AG, 8052 Zürich (CH)
(72) Erfinder: Pribil, Klaus Dr., 8152 Glattbrugg (CH)
(74) Vertreter: Hotz, Klaus

(56) Entgegenhaltungen:
- EP-A- 0 837 567
- WO-A-97/33790
- GB-A- 2 082 995
- JP-A- 11 004 196
- US-A- 3 742 358

## Beschreibung

Die Erfindung betrifft ein drahtloses Datenkommunikationsnetz gemäß dem Oberbegriff des Patentanspruchs 1.

Bei drahtlosen Datenkommunikationsnetzen werden die zu übertragenden Daten bekanntermaßen ohne Zwischenschaltung eines Leitungsmediums, wie zum Beispiel eines elektrischen Leiters oder einer Glasfaser, übertragen. Die zu übertragenden Daten werden hier mittels geeignet modulierter elektromagnetischer oder optischer Wellen übermittelt.

Datenübertragungsverfahren mittels hochfrequenter elektromagnetischer Wellen sind vielfach bekannt und werden heutzutage insbesondere in der Telekommunikation eingesetzt. Zum Beispiel lassen sich Telefongespräche aus dem Festnetz oder Mobilfunknetz über hochfrequente Richtfunkverbindungen extraterrestrisch über kurze bis mittlere Strecken übermitteln. Darüber hinaus wird dieses Datenübertragungsverfahren seit etwa 20 Jahren sehr erfolgreich dazu verwendet, Informationen via Satelliten über weite Strecken zu übermitteln. Die Satellitenübertragung wird derzeit insbesondere zur Übertragung von Radio- und Rundfunkfrequenzen aber auch für interkontinentale Telefonverbindungen benützt.

Aus der EP-Patentanmeldung EP 837567-A2 sind verschiedene Kommunikationssysteme bekannt, bei denen ein Flugzeug oder eine Gruppe von Flugzeugen zum Einsatz kommt/en. Es handelt sich bei den beschriebenen Kommunikationssystemen um Breitbandsysteme zur Kommunikationsvermittelung zwischen mobilen Kunden. Die EP-Patentanmeldung EP 837567-A2 wird als nächstliegender Stand der Technik betrachtet.

Drahtlose optische Datenübertragungsverfahren arbeiten mit datenmodulierten Laserimpulsen. Im Vergleich zu hochfrequenten Richtfunkverbindungen erweisen sich die optischen Freiraumverbindungen zur Datenübertragung aus vielerlei Gründen als sehr vorteilhaft. So läßt sich ein optischer Laserstrahl dank seiner extrem kurzen Wellenlänge sehr leicht mit einer relativ kleinen Sendeoptik und damit mit sehr kleinem Raumwinkel abstrahlen. Durch diese gute Fokussierbarkeit des Laserstrahls können bei der optischen Datenübertragung im Gegensatz zur oben genannten Richtfunkübertragung sehr kleine Sendestationen und Empfangsantennen zum Einsatz kommen. Mit diesen minimalisierten optischen Antennen lassen sich mit einer minimalen Sendeleistung weit größere Datenraten übertragen, als dies beispielsweise bei der Datenübertragung mittels Richtfunk bei gleicher Sendeleistung möglich wäre. Schließlich weisen optische Datenübertragungsverfahren vorteilhafterweise nahezu kein Hintergrundrauschen auf.

Die gute Fokussierbarkeit bzw. Bündelbarkeit des optischen Sendestrahls erfordert jedoch eine äußerst präzise Bestimmung der Richtung des Sendestrahls in der Sendestation sowie eine exakte Nachführung und Ausrichtung der Empfangsoptik in der Empfängerstation. Darüber hinaus ergibt sich insbesondere in der optischen Freiraum-Datenkommunikation das Problem, dass mindestens eine dieser Stationen frei im Raum beweglich angeordnet ist, was ein Vorhalten des optischen Laserstrahls auf die Empfängeroptik notwendig macht. Ein Verfahren und eine Anordnung zum unterbrechungsfreien Betrieb von optischen Datenverbindungen zwischen Satelliten, bei dem zur Datenübertragung zwischen den jeweiligen Satelliten ein Laserstrahl zum Einsatz kommt, ist in der EP 0 876 013 A1 beschrieben.

Neben einer hohen Datenübertragungsrate, einem möglichst geringen Energieverbrauch von Sende-/Empfängerstationen und einer möglichst rauschfreien Datenübertragung sind insbesondere in der militärischen Luft- und Raumfahrttechnik noch zusätzliche Anforderungen an gattungsgemäße Datenkommunikationsnetze gestellt:
Insbesondere für die militärische Aufklärung bzw. der Informationsübermittlung in Krisen- oder Kriegsgebieten müssen die dort verwendeten Datenkommunikationsnetze ein Höchstmaß an Abhörsicherheit und Störsicherheit der Datenübertragung gewährleisten. Zwar gibt es in solchen Krisen- oder Kriegsgebieten in der Regel ein existierendes Kommunikationsnetzwerk, doch soll dieses aus Gründen einer mangelnden oder fehlenden Abhörsicherheit gerade nicht verwendet werden. Bislang wurde daher als naheliegende Lösung ein satellitengestütztes Datenkommunikationsnetz verwendet, bei dem die zu übermittelnden Daten von einer bodengestützen oder flugzeuggestützen Sendestation via Satelliten zur Empfängerstation übermittelt werden. Die Datenübertragung erfolgt hier über Funksignale. Es hat sich jedoch gezeigt, dass dieses Datenübertragungsverfahren nicht hundertprozentig abhörsicher ist und zudem unerwünschterweise von Dritten gestört bzw. unterbrochen werden kann.

Von entscheidender Bedeutung ist es ferner, dass ein möglichst abhörsicheres Kommunikationsnetzwerk sehr schnell und mit verhältnismäßig einfachen Mitteln aufgebaut werden kann. Dieses Kommunikationsnetzwerk sollte nahezu unabhängig von der existierenden Infrastruktur betreibbar sein. Darüber hinaus kann beispielsweise eine Veränderung der Lage es erforderlich machen, dass der Aufbau des Datenkommunikationsnetzes verändert werden muß, was eine gewisse Flexibilität der verwendeten Netzwerktopologie wünschenswert macht.

Ein derartiges Datenkommunikationsnetz, dass all die genannten Anforderungen erfüllt, konnte bislang nicht befriedigend realisiert werden.

Ausgehend davon ist an die vorliegende Erfindung die Aufgabe gestellt, eine universell einsetzbares, weitestgehend abhörsicheres und störsicheres Datenkommunikationsnetz bereitzustellen, das zudem zur Datenübertragung mit hoher Informationsdichte geeignet ist.

Die anordnungsbezogene Aufgabe wird erfindungsgemäß durch ein Datenkommunikationsnetz mit den Merkmalen des Patentanspruchs **1** gelöst.

Demgemäß ist ein drahtloses Datenkommunikationsnetz vorgesehen, mit mindestens zwei ortsveränderlichen Flugobjekten, die sich in einem gemeinsamen, eingeschränkten Bereich in der Erdatmosphäre oder in erdatmosphärnaher Entfernung zur Erdoberfläche befinden, mit mindestens einer optischen Transceiverstation in jedem Flugobjekt, die jeweils unterbrechungsfrei über erste drahtlose Datenverbindungen, die zumindest teilweise als laseroptische Datenverbindungen ausgebildet sind, miteinander koppelbar sind, mit mindestens einer ortsfesten Boden- oder bodennahen -Station, die jeweils mit mindestens einer Transceiverstation über zweite drahtlose Datenverbindungen koppelbar sind.

Ein Verfahren zum Betreiben eines Datenkommunikationsnetzes weist die folgenden Verfahrensschritten auf:
(a) Zwischen mindestens zwei jeweils in Flugobjekten angeordneten Transceiverstationen erfolgt über die ersten Datenverbindungen ein Datentransfer, wobei für den Datentransfer zumindest abschnittsweise ein optisches Lasersignal verwendet wird.
(b) Zwischen mindestens einer Transceiverstationen und einer Boden- oder bodennahen Station erfolgt dann über die zweiten Datenverbindungen ein drahtloser Datentransfer, bei dem ein Datensignal von der jeweiligen Transceiverstation empfangen wird und/oder zu der entsprechenden Transceiverstation gesendet wird.

Die Unteransprüche sind auf bevorzugte Ausgestaltungen und Weiterbildungen der Erfindung gerichtet.

Die vorliegende Erfindung beschreibt ein optisches Datenkommunikationsnetz, das auf ortsfeste Boden- oder bodennahe -Stationen und ortsfreien Flugobjekten basiert, die zusammen über drahtlose Datenverbindungen verbunden sind und somit ein über weite Bereiche frei konfigurierbares Kommunikationsnetzwerk bilden. Dieses Datenkommunikationsnetz erfüllt die eingangs genannten, an eine Datenkommunikation insbesondere in Krisen- oder Kriegsgebieten gestellten Anforderungen und erlaubt eine elektrisch rückwirkungsfreie Verknüpfung der Eingangs- und Ausgangssignale des Datenkommunikationsnetzes.

Das vorgeschlagene Konzept basiert im wesentlichen auf einer unterbrechungsfreien optischen Laserkommunikation zwischen verschiedenen Flugobjekten, die über der Wolkengrenze operieren. Diese laseroptischen Datenverbindungen bieten ein Höchstmaß an Abhörsicherheit und lassen sich zudem vorteilhafterweise sehr schnell aufbauen bzw. verändern. Dieses Datenkommunikationsnetz, das in Konkurrenz zu satellitengestützen Kommunikationsnetzen steht, läßt sich im Gegensatz dazu mit verhältnismäßig einfachen und kostengünstigen Mitteln installieren. Für den Aufbau eines solchen Datenkommunikationsnetzes sind neben den ohnehin vorhandenen Boden- oder bodennahen -Stationen lediglich mindestens zwei Flugobjekte erforderlich. Da die einzelnen Flugobjekte, die jeweils die Netzwerkknoten des Datenkommunikationsnetzes darstellen, in weiten Grenzen unabhängig voneinander operieren können, kann eine maximale Autonomie der Netzwerkknoten garantiert werden. Insbesondere kann dadurch das Datenkommunikationsnetz sehr schnell rekonfiguriert und so an eine Veränderung angepaßt werden. Durch den Einsatz von zusätzlichen Flugobjekten läßt sich zudem eine Redundanz und somit eine größere Flexibilität in der Topologie des Datenkommunikationsnetzes erzeugen.

Weitere Einzelheiten und Vorteile der Erfindung werden im folgenden durch zwei Ausführungsbeispiele erläutert. Die Erfindung wird dabei nachfolgend anhand der in den Figuren der Zeichnung angegebenen Ausführungsbeispiele näher erläutert. Es zeigt dabei:
- **Fig. 1**: ein erstes Ausführungsbeispiel eines erfindungsgemäßen Datenkommunikationsnetzes;
- **Fig. 2**: ein zweites Ausführungsbeispiel eines erfindungsgemäßen Datenkommunikationsnetzes,
- **Fig. 3**: ein Diagramm, das die maximalen Streckenabstände in Abhängigkeit von der Wolkengrenze und der Flughöhe der Flugzeuge angibt.

In allen Figuren der Zeichnung sind gleiche oder funktionsgleiche Elemente mit gleichen Bezugszeichen versehen.

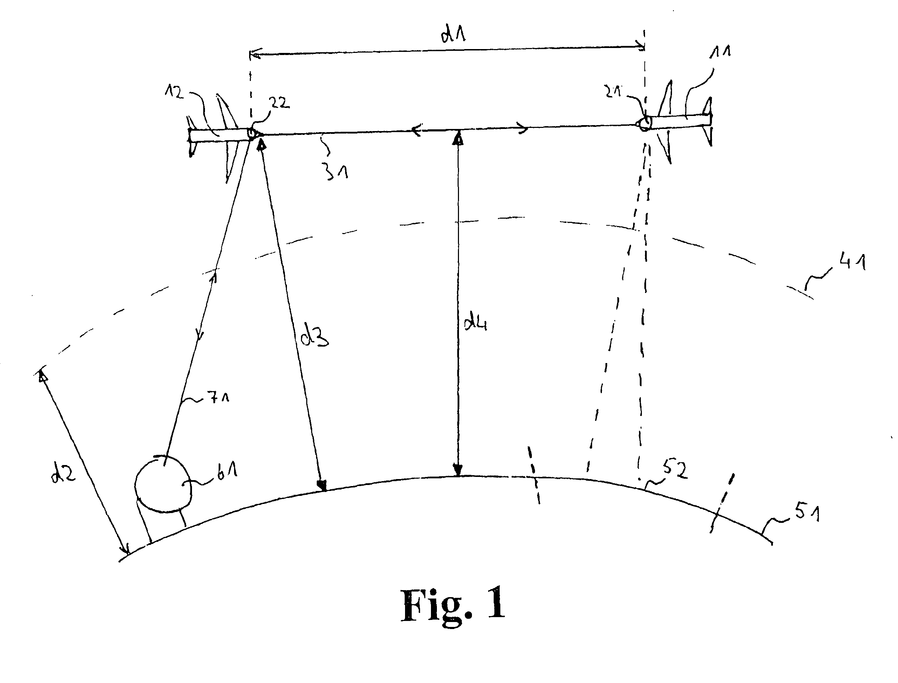

**Figur 1** zeigt ein erstes Ausführungsbeispiel eines erfindungsgemäßen, aus Flugzeugen aufgebauten Datenkommunikationsnetzes. In **Figur 1** sind mit **11**, **12** zwei in großer Höhe fliegende Flugzeuge dargestellt. In beiden Flugzeuge **11**, **12** ist jeweils eine optische Transceiverstation **21**, **22** eingebaut. Die Transceiverstationen **21**, **22** sind über eine optische Datenverbindung **31** direkt miteinander gekoppelt. Ferner ist eine an der Erdoberfläche **51** angeordnete Basisstation **61** vorgesehen, die im vorliegenden Ausführungsbeispiel mit einem Flugzeug **12** über ein weitere Datenverbindung **71** verbunden ist.

Wesentlich für diese Kopplung der Transceiverstationen **21**, **22** ist eine unterbrechungsfreie optische Datenverbindung **31**. Aus diesem Grund sind im vorliegenden Beispiel die beiden Flugzeuge **11**, **12** und die diese verbindende Datenverbindung **31** oberhalb der Wolkengrenze **41** angeordnet. Dabei wurde die Flughöhe der Flugzeuge mit **d3**, die Abstände der Flugzeuge zueinander mit **d1** und die Wolkenhöhe mit **d2** angegeben.

Die Transceiverstationen **21**, **22** können zum bidirektionalen oder unidirektionalen Datentransfer, dass heißt zum Senden und/oder zum Empfangen von optisch modulierten Daten ausgelegt sein, wobei die zu sendenden Daten in Form eines breitbandigen Laserstrahles moduliert werden. Die optische Sendeeinheit einer zum Senden ausgelegten Transceiverstation **21**, **22** enthält Mittel zum optischen Senden der Daten, eine Lasereinheit und einen optischen Ausgangsverstärker. Eine optische Empfangseinheit einer zum Empfangen ausgelegten Transceiverstation **21**, **22** weist in der Regel einen Empfangsverstärker und Mittel zum optischen Datentransfer auf. Ferner weisen die Transceiverstationen **21**, **22** Mittel zur Positionsstabilisierung sowie Mittel zur Nachführung des optischen Strahls auf. Dadurch kann gewährleistet werden, dass bei geringfügigen Vibrationen bzw. Relativbewegungen der Transceiverstationen **21**, **22** gegeneinander eine unterbrechungsfreie Datenverbindung **31** gewährleisten wird. Die optische Sende- und Empfangseinrichtungen einer Transceiverstation **21**, **22** sind vorteilhafterweise im Raum frei schwenkbar gelagert, so dass sie mit ebenfalls frei beweglichen anderen Transceiverstationen **21**, **22** unterbrechungsfreie Datenverbindungen **31** aufbauen können.

Der Aufbau und die Funktionsweise solcher Transceiverstationen ist in der EP 0 847 150 1 und in der EP 0 863 627 A1 genau beschrieben. [Der Inhalt dieser Patentanmeldungen wird hiermit vollinhaltlich in den Gegenstand der vorliegenden Patentanmeldung mit einbezogen ("incorporated by reference").]Dort steht unter anderem, dass "Als drittes muss während der Datenübertragung eine permanente Nachführung der Ausrichtung erfolgten, um fehlerhafte Abweichungen von der hochpräzisen Ausrichtung, die verschiedene Ursachen haben können, zu kompensieren. Im weiteren muss im allgemeinen bei der Ausrichtung eine Relativbewegung zwischen dem Terminal und einem Gegenterminal berücksichtigt werden."

Nachfolgend wird die Funktionsweise des Datenkommunikationsnetzes aus **Figur 1** kurz beschrieben.

Das erste Flugzeug **11** hält sich im gezeigten Beispiel über einem Teilabschnitt **52** der Erdoberfläche auf, während das zweite Flugzeug **12** sich über einem von dem Teilabschnitt **52** weit entfernten Bereich aufhält. Der Teilabschnitt **52** kann beispielsweise ein Krisen- oder Kriegsgebiet sein, über das das erste Flugzeug **11** zum Zwecke der Luftaufklärung fliegt. Die aus dieser Luftaufklärung gewonnenen Daten werden über einen breitbandigen, datenmodulierten Laserstahl **31** von der ersten Transceiverstation **21** zur zweiten Transceiverstation **22** im zweiten Flugzeug **12** gesendet. Mit diesem breitbandigen Laserstrahl lassen sich vorteilhafterweise Datenübertragungsraten weit über 100Mbit/sec übertragen. Die datenmodulierten Laserstrahlen weisen einen minimalen Streuwinkel auf und verhindern somit eine unerwünschte Abstrahlung. Durch diese Art der Datenübermittlung kann sichergestellt werden, dass zumindest über dem Teilabschnitt **52** eine abhörsichere und störsichere Datenübermittlung stattfindet.

Vom zweiten Flugzeug **12** können die demodulierten Daten über die weitere Datenverbindung **71** zur Boden- oder bodennahen Station **61** gesendet werden. Die Datenübermittlung über die weitere Datenverbindung **71** kann über Funksignale erfolgen, da sich die Bodenstation im gezeigten Fall weit außerhalb des Teilabschnittes **52** befindet und sich hier somit eine reduzierte Anforderung an die Störsicherheit bzw. Abhörsicherheit der Datenübertragung ergibt. Es wäre jedoch auch hier eine optische Datenübertragung zwischen Flugzeug **11** und der Boden- oder bodennahen Station **61** denkbar.

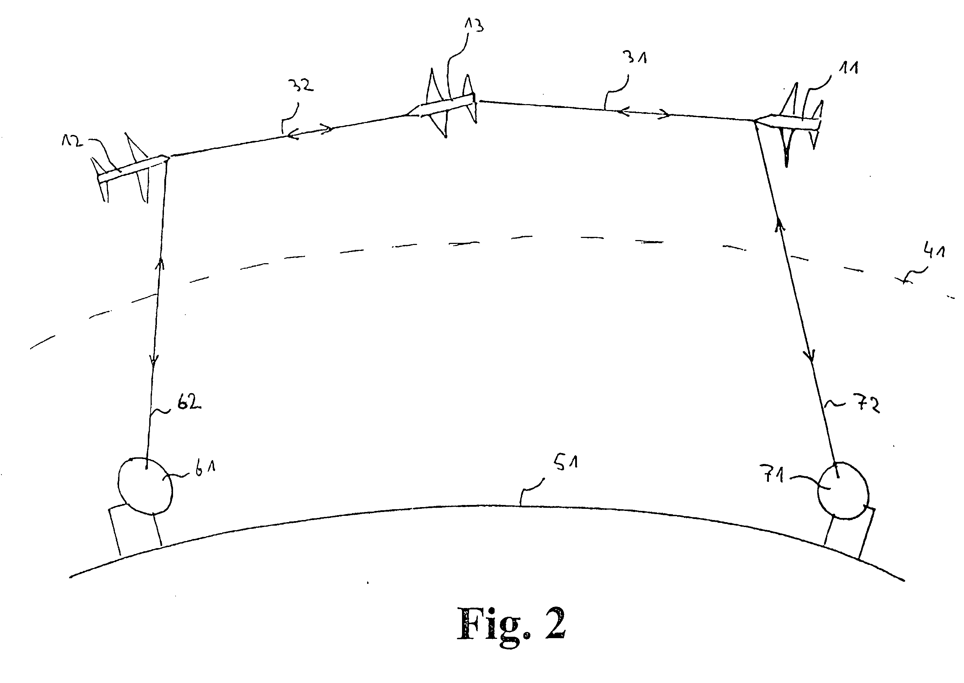

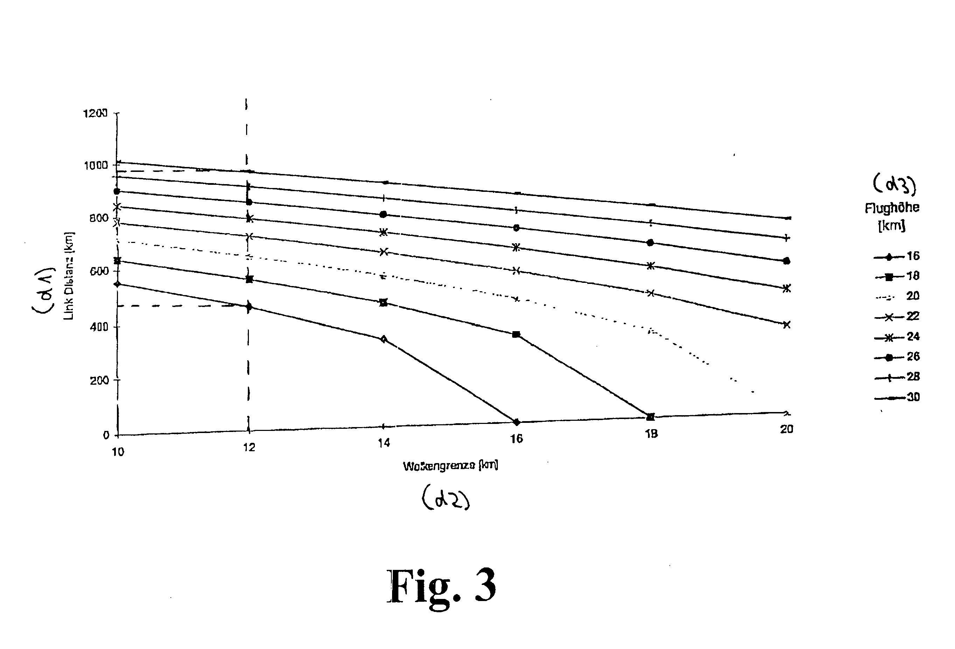

**Figur 2** zeigt ein zweites Ausführungsbeispiel eines erfindungsgemäßen Datenkommunikationsnetzes. Es sind hier drei Flugzeuge **11**, **12**, **13** vorgesehen, deren Transceiverstationen (in **Figur 3** nicht eingezeichnet) jeweils über Datenverbindungen **31**, **32** miteinander verbunden sind. Züsätzlich sind zwei Bodenstationen (oder bodennahe Stationen) 61, **71** dargestellt, die jeweils mit einem der Flugzeuge **11**, **12** über weitere Datenverbindungen **62**, **72** verbunden sind. Im gezeigten Beispiel gemäß **Figur 2** läßt sich dadurch ein geschlossenes Datenkommunikationsnetz erzeugen, bei dem eine vollständig abhörsichere und störsichere Datenkommunikation zwischen zwei Bodenstationen **61**, **62** über sehr weite Strecken möglich ist.

Die **Figuren 1** und **2** lassen erkennen, dass sich beliebige erfindungsgemäße Datenkommunikationsnetze erzeugen lassen, indem eine beliebige Anzahl von Flugzeugen **11**, **12**, **13** und Bodenstationen **61**, **62** über laseroptische Datenverbindungen geeignet gekoppelt werden.

Wie bereits erwähnt ist eine unterbrechungsfreie optische Datenverbindungen **31**, **32** essentiell für die Funktionsweise des Datenkommunikationsnetzes. Eine über weite Strekken unterbrechungsfreie optische Verbindung läßt sich typischerweise, jedoch nicht notwendigerweise, oberhalb der Wolkengrenze **41** sicherstellen. Aus diesem Grund müssen die über Datenverbindungen **31**, **32** miteinander verbundenen Flugzeuge **11**, **12**, **13** mindestens so hoch fliegen, dass die entsprechende Datenverbindung **31**, **32** zwischen ihnen zuverlässig über der Wolkengrenze **41** angeordnet sind (**d4** > **d2**).

Figur **3** zeigt ein Diagramm, welches die maximalen Streckenabstände (**d1**) zwischen zwei Flugzeugen als Funktion der Flughöhe (**d3**) und der Wolkengrenze (**d2**) angibt. Es zeigt sich, dass bei einer angenommenen Wolkengrenze von 12 km und einer Flughöhe von 16 km sich eine maximale Streckenlänge zwischen den Flugzeugen von etwa 500 km ergibt, während bei einer Flughöhe von 30 km sich die freie Streckenlänge nahezu verdoppelt.

In den **Figuren 1** und **2** wurden zur Realisierung des erfindungsgemäßen Datenkommunikationsnetzes solche Flugzeuge **11**, **12**, **13** verwendet, die für den Flug in großer Höhe ausgelegt sind. Solche in der Regel düsenbetriebenen Höhenflugzeug weisen eine zumeist weit über der maximalen Wolkengrenze liegende Dienstgipfelhöhe auf. In jedem Fall sollten aber die Flugzeuge zumindest eine Flughöhe von mehr als 12000 m aufweisen. Statt der Verwendung von Flugzeugen wäre es auch denkbar Fesselballone zu verwenden. Mit Fesselballonen lassen sich sehr hohe Flughöhen bis in die Stratosphäre erreichen. Diese können selbstverständlich auch als sogenannte unbemannte Drohnen ausgebildet sein, wie sie häufig in Krisengebieten zu Aufklärungszwecken eingesetzt werden.

### Bezugszeichenliste:

- **11**, **12**, **13**: Flugzeug, Flugobjekt
- **21**, **22**: Transceiverstation
- **31**, **32**: (optische) Datenverbindung
- **41**: Wolkengrenze
- **51**: Erdoberfläche
- **52**: Teilabschnitt auf der Erdoberfläche
- **61**, **62**: Basisstation
- **71**, **72**: weitere Datenverbindung

## Patentansprüche

1. Drahtloses Datenkommunikationsnetz
• mit mindestens zwei ortsveränderlichen Flugobjekten (**11**, **12**, **13**), die sich in einem gemeinsamen, eingeschränkten Bereich in der Erdatmosphäre oder in erdatmosphämaher Entfernung zur Erdoberfläche (**51**) befinden,
• mit mindestens einer optischen Transceiverstation (**21**, **22**) in jedem Flugobjekt (**11**, **12**, **13**),
die jeweils unterbrechungsfrei über erste drahtlose Datenverbindungen (**31**, **32**), die zumindest teilweise als laseroptische Datenverbindungen ausgebildet sind, miteinander koppelbar sind,
• mit mindestens einer ortsfesten Boden- oder bodennahen Station (**61**, **62**), die jeweils mit mindestens einer Transceiverstation (21, 22) über zweite drahtlose Datenverbindungen (71, 72) koppelbar sind, mindestens eine der Transceiverstationen (21, 22) zum bidirektionalen Datentransfer ausgelegt ist und zu diesem Zweck eine optische Empfängereinheit und eine optische Sendeeinheit aufweist,
• wobei die optische Sendeeinheit Mittel zur optischen Datenmodulation, eine Lasereinheit und einen optischen Ausgangsverstärker zum Abgeben von datenmodulierten Laserimpulsen aufweist, wobei durch diese Art der Datenübermittlung sichergestellt wirden, dass eine abhörsichere und störsichere Datenübermittlung stattfindet, und
• wobei die optische Empfängereinheit einen Empfangsverstärker und Mittel zur optischen Datendemodulation aufweist, und
• die jeweils über die ersten Datenverbindungen (31, 32) miteinander gekoppelten Transceiverstationen (**21**, **22**) Mittel zur Positionsstabilisierung und/oder Mittel zur Nachführung des optischen Strahls aufweisen, die bei geringfügigen Vibrationen und/oder Relativbewegungen der Transceiverstationen (**21**, **22**) gegeneinander eine unterbrechungsfreie optische Datenverbindung (31, 32) gewährleisten,
• wobei die Mittel zur Positionsstabilisierung eine Ausrichtvorrichtung mit einer Grobausrichtvorrichtung und einer Feinausrichtvorrichtung zum Ausrichten des optischen Strahles auf einen optischen Empfangsstrahl umfassen.

2. Datenkommunikationsnetz nach Anspruch **1**,
***dadurch gekennzeichnet, dass***
mindestens eine der Transceiverstationen (**21**, **22**) im Raum derart frei schwenkbar gelagert ist, dass diese Transceiverstationen (**21**, **22**) mit beliebigen anderen Transceiverstationen (**21**, **22**) über erste Datenverbindungen (**31**, **32**) koppelbar ist.

3. Datenkommunikationsnetz nach einem der Ansprüche **1 oder 2,**
***dadurch gekennzeichnet, dass***
der Datentransfer über die ersten Datenverbindungen (**31**, **32**) mittels eines breitbandigen Laserstrahls erfolgt.

4. Datenkommunikationsnetz nach Anspruch **3**,
***dadurch gekennzeichnet, dass***
die Datenübertragungsrate des breitbandigen Laserstrahls zumindest einige, vorzugsweise 25 Mbit/sec, beträgt.

5. Datenkommunikationsnetz nach einem der einem der Ansprüche **1** bis **4**, ***dadurch***
***gekennzeichnet, dass***
es sich bei den Flugobjekten (**11**, **12**, **13**) um Höhenflugzeuge mit einer maximalen Flughöhe von mindestens 10'000 m handelt.

6. Datenkommunikationsnetz nach einem der einem der Ansprüche **1** bis **5**,
***dadurch gekennzeichnet, dass***
jeweils zwei über einen Datentransfer optisch miteinander gekoppelte Flugobjekte (**11**, **12**, **13**) im wesentlichen dieselbe Flughöhe aufweisen und dass die erste Datenverbindung (**31**, **32**) zwischen diesen beiden Flugobjekten (**11**, **12**, **13**) bezogen auf die Erde jeweils oberhalb der Wolkengrenze (**41**) angeordnet ist.

## Claims

1. Wireless data communications network
• with at least two travelling flying objects (11, 12, 13) which are located in a common limited area of the earth's atmosphere or at a distance from the earth's surface (51) which is close to the earth's atmosphere;
• with at least one optical transceiver station (21, 22) in each flying object (11, 12, 13) which can be coupled with each other in an uninterruptible way via first wireless data connections (31, 32) which are arranged at least partly as laser-optical data connections;
• with at least one stationary ground or near-ground station (61, 62) which can each be coupled with at least one transceiver station (21, 22) via two wireless data connections (71, 72), at least one of the transceiver stations (21, 22) being arranged for bidirectional data transfer and comprising for this purpose an optical receiver unit and an optical transmitter unit;
• whereby the optical transmitter unit comprises means for optical data modulation, a laser unit and an optical output amplifier for emitting data-modulated laser pulses, with it being ensured by this kind of data transmission that an intercept-proof and interference-proof data transmission occurs, and
• whereby the optical receiver unit has a receiver amplifier and means for optical data modulation, and
• the transceiver stations (21, 22) which are each coupled with each other via the first data connections (31, 32) comprise means for position stabilization and/or means for following up the optical beam which ensure in the case of slight vibrations and/or relative movements of the transceiver stations (21, 22) relative to one another an interruption-free optical data connection (31, 32);
• whereby the means for position stabilization comprising an alignment apparatus with a rough alignment apparatus and fine alignment apparatus for aligning the optical beam to an optical receiving beam.

2. Data communications network according to claim 1, **characterized in that** at least one of the transceiver stations (21, 22) is held in space in a freely swivelable manner in such a way that said transceiver station (21, 22) can be coupled with any other transceiver stations (21, 22) via first data connections (31,32).

3. Data communications network according to claim 1 or 2, **characterized in that** the data transfer occurs via the first data connections (31, 32) by means of a broadband laser beam.

4. Data communications network according to claim 3, **characterized in that** the data transmission rate of the broadband laser beam is at least a few Mbit/sec, preferably 25 Mbit/sec.

5. Data communications network according to one of the claims 1 to 4, **characterized in that** the flying objects (11, 12, 13) are high-altitude aircraft with a maximum flight altitude of at least 10,000 m.

6. Data communications network according to one of the claims 1 to 5, **characterized in that** two flying objects (11, 12, 13) each coupled with each other optically via a data transfer substantially have the same flight altitude and that the first data connection (31, 32) arranged between these two flying objects (11, 12, 13) is each arranged relating to earth above the cloud base (41).

## Revendications

1. Réseau de communication de données sans fil
• comportant au moins deux objets volants de lieu variable localement (11, 12, 13), qui se trouvent dans une zone commune limitée de l'atmosphère terrestre ou selon un éloignement par rapport à la surface terrestre proche de l'atmosphère terrestre (51),
• comportant au moins une station optique émettrice-réceptrice (21, 22) dans chaque objet volant (11, 12, 13) lesquelles stations peuvent être couplées l'une avec l'autre respectivement de façon ininterrompue par des premières liaisons de données sans fil (31, 32) qui sont exécutées au moins partiellement en tant que liaisons de données optiques par laser,
• comportant au moins une station fixe au sol ou près du sol (61, 62), lesquelles stations peuvent être respectivement couplées avec au moins une station émettrice-réceptrice (21, 22) par des secondes liaisons de données sans fil (71, 72), avec au moins une des stations émettrices-réceptrices (21, 22) conçue pour un transfert de données bidirectionnel et présentant pour ce faire une unité optique réceptrice et une unité optique émettrice,
• dans lequel l'unité optique émettrice présente des moyens permettant une modulation optique des données, une unité laser et un amplificateur optique de sortie permettant d'émettre des impulsions laser modulées en données, suite à quoi ce type de transmission de données garantit qu'il se produit une transmission de données protégée contre les écoutes clandestines et contre le brouillage, et
• dans lequel l'unité optique réceptrice présente un amplificateur de réception et des moyens permettant une démodulation optique des données, et
• les stations émettrices réceptrices (21, 22) respectivement couplées l'une avec l'autre par les premières liaisons de données (31, 32) présentent des moyens permettant une stabilisation de position et/ou des moyens permettant de suivre le faisceau optique, qui garantissent en cas de faibles vibrations et/ou déplacements relatifs des stations émettrices-réceptrices (21, 22) l'une par rapport à l'autre une liaison optique de données (31, 32) de façon ininterrompue,
• dans lequel les moyens permettant une stabilisation de position comportent un dispositif d'alignement avec un dispositif d'alignement grossier et un dispositif d'alignement précis permettant d'aligner le faisceau optique sur un faisceau optique de réception.

2. Réseau de communication de données selon la revendication 1, **caractérisé en ce qu'**au moins une des stations émettrices-réceptrices (21, 22) est placée dans l'espace de façon à pivoter librement de manière à ce que ces stations émettrices-réceptrices (21, 22) puissent être couplées avec d'autres stations émettrices-réceptrices quelconques (21, 22) par les premières liaisons de données (31, 32).

3. Réseau de communication de données selon l'une des revendications 1 ou 2, **caractérisé en ce que** le transfert de données par les premières liaisons de données (31, 32) se fait au moyen d'un faisceau laser large bande.

4. Réseau de communication de données selon la revendication 3, **caractérisé en ce que** la vitesse de transmission de données du faisceau laser large bande est au moins égale à quelques Mbits/s, de préférence à 25 Mbits/s.

5. Réseau de communication de données selon l'une des revendications 1 à 4, **caractérisé en ce qu'**il s'agit concernant les objets volants (11, 12, 13) d'avions d'altitude ayant une hauteur de vol maximum d'au moins 10 000 m.

6. Réseau de communication de données selon l'une des revendications 1 à 5, **caractérisé en ce que** respectivement deux objets volants (11, 12, 13) couplés l'un avec l'autre par voie optique par un transfert de données présentent essentiellement la même altitude de vol et **en ce que** la première liaison de données (31, 32) entre ces deux objets volants (11, 12, 13) est disposée respectivement, par rapport à la terre, au-dessus de la limite des nuages (41).
